# EUROPEAN PATENT SPECIFICATION

(11) **EP 2 251 961 B1**
(45) Date of publication and mention of the grant of the patent: **14.11.2012**
(21) Application number: 09305438.5
(22) Date of filing: 15.05.2009
(51) Int. Cl.: H02K 11/00

(54) **Carrier for electronic components, and electric motor**
Träger für elektronische Bauteile und Elektromotor
Support pour composants électroniques et moteur électrique

(43) Date of publication of application: 17.11.2010
(73) Proprietor: Dunkermotoren GmbH, 79848 Bonndorf (DE)
(72) Inventor: Stockburger, Thomas, 78224, Singen (DE); Flügel, Johannes, 79761, Waldshut-Tiengen (DE)
(74) Representative: Dreiss

(56) References cited:
- EP-A2- 1 753 124
- DE-A1-102007 014 645

## Description

The invention relates to a carrier for electronic components, especially including power electronics components, especially for use inside a metallic housing of an electric motor, with means for transfer of waste heat, according to the preamble of claim 1, and to an electric motor, especially a brushless DC motor, with a housing and with electronic components included inside the housing, according to the preamble of claim 4.

Power electronics components for controlling brushless DC motors often are integral parts of such motors. It is known to use internally applied carrying such power electronics components together with related position sensors and control elements. Then the problem is to be solved of how to thermally contact the power electronics components and the motor housing, then acting as a heat sink.

A first solution to this problem is given in US 7,161,268 B2, issued to Bernhard M. Kaiser, internal docket 114413. There the printed circuit board is arranged perpendicular to the axle of the motor with the power electronics components standing upright and spread along the circumference of such board. A separate intermediate heat sink is used to transfer the heat from the power electronics components to the housing. The power electronics components are screwed onto such intermediate heat sink, which on the other side is pressed to the housing by means of a circlip. An alternative solution is given in EP 1 876 689 B1. Both solutions need additionally to be mounted components and both need an additional step to achieve the necessary pressure between the heat dissipating elements.

DE 10 2007 014 645 A1 discloses a housing 6 in which an electric motor 3 is located. Furthermore, a cooling element 14 with a radial edge 15 is comprised in the housing 6. The cooling element 6 carries electronic components. This solution requires additional measures to ensure a good thermal contact between the cooling element 14 and the housing 6.

According to the invention this problem is solved by a carrier according to the teaching of claim 1, and by an electric motor according to the teaching of claim 4.

The invention makes use of the availability of flexible printed circuit boards that can do both, transfer the heat, and give the necessary mechanical pressure to ensure a good thermal contact.

It is obvious that carriers according to the teaching of claim 1 are not only valuable for the controlling of brushless DC motors, as mentioned as starting point of this invention, but such carriers are valuable in lots of situations, where waste heat producing parts and related heat sinks are to be mounted separately and only later come into thermal contact. Further embodiments of the invention are given in the subclaims and in the following description.

In the following the invention will be described with the aid of the accompanying drawings, in which:
- Figure 1: shows a very schematic cross-sectional view of an electric motor according to the invention with a carrier according to the invention.
- Figure 2: shows a top view of a carrier according to the invention, without any components mounted thereon.
- Figure 3: shows a cross-sectional view of the carrier shown in figure 2.

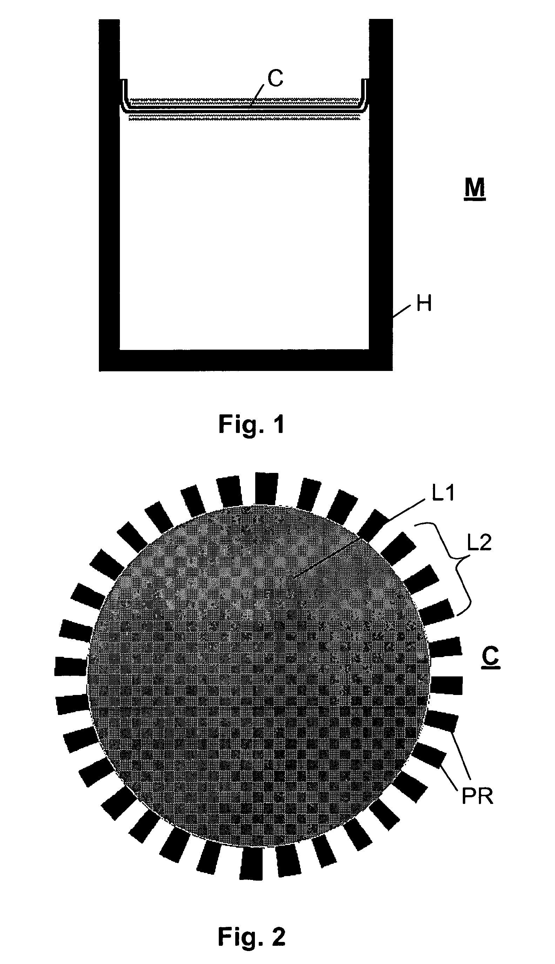

Figure 1 shows a very schematic cross-sectional view of an electric motor M according to the invention. Only a housing H and a carrier C according to the invention are shown.

The housing H represents not only the housing as such but also all other parts of the motor that are to be assembled before connecting rotor or stator coils to control elements.

In the case of a brushless DC motor these parts are mainly a stator with stator coils, an axle with a rotor with permanent magnets, and a positioning encoder (e.g. a magnet) affixed to the axle.

Otherwise the stator may carry permanent magnets, and the rotor will carry the coils; in this case a collector will ensure the electric contact between fixed and rotating parts; but such motors seldom include power electronics components.

In any case the housing at the bottom (in this view) will be completed by an end shield carrying bearings for the axle, mostly ball bearings. And in addition often there are special mountings to attach the motor where needed.

The main part of the housing, not the end shield, often is made in continuous casting out of metal. So it gives the opportunity to also act as heat sink.

In a likewise very schematic way the carrier C is shown. In this example it is composed out of three layers of a multilayer printed circuit board. The upper and the lower layer are non-flexible layers, whereas the middle layer is a flexible one. The non-flexible ones carry the components and their connections, and only to a minor extend serve transferring the heat, while the flexible one serves for transferring the heat from the components to the housing H of the motor M.

This kind of sandwich structure is of particular advantage even in cases where only one layer would suffice to carry the components and their connections. In such case either of the outer non-flexible layers may show a closed conducting area both, for additional heat transfer capabilities, and for improvement of electromagnetic compliance. But of course also further layers may prove necessary according to normal circuit design and layout.

For assembling such motor M, on the one hand stator and rotor are to be inserted into the housing H, on the other hand the blank carrier, which as such already is considered to be a carrier according to the invention, is to be equipped with components. The stator carries stator coils that end in connection pins extending in the axial direction of the motor M. The carrier shows solder points and related bore-holes fitting on those connection pins and to be soldered therewith.

Figure 2 shows such carrier C, from above or from below. It is assumed here, that the cross-section of the housing H of the motor M is a circular one. In this case also the carrier C in principle is circular. We see one non-flexible layer L1 displayed with fine dots, and the flexible layer L2, the visible part displayed in black. The non-flexible layer L1 does not show any structure here because this is not influenced by the invention. The flexible layer L2 comprises a uniform part with a shape identical to that of the non-flexible layer L1, and a multiple of protruding ranges PR radially extending outwards.

Number and form of the protruding ranges PR depend on the form of the layer, which as such depends on the cross-section of the motor's housing H. A circular housing asks for circular layers and for a high number of equally distributed like protruding ranges PR, while a quadratic housing would ask for quadratic layers and only four like protruding ranges PR.

As in this example the whole layer L2 is flexible, the protruding ranges PR are flexible as well. This flexibility ensures a smooth thermal contact between this layer and the housing H of the motor M. This thermal contact may be improved by the use of an additional flexible element like a circlip provided after inserting the carrier C into the housing H.

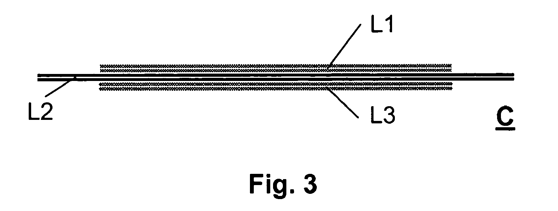

Figure 3 finally shows the carrier C in a cross-sectional view before being equipped with components and before having been inserted into the motor's housing H. Here we see the already mentioned non-flexible layer L1 and the flexible layer L2, but also the other non-flexible layer L3.

## Claims

1. Carrier (C) for electronic components, especially including power electronic components, for use inside a metallic housing (H) of an electric motor (M), wherein said carrier (C) comprises means for transfer of waste heat, and wherein said carrier (C) includes at least two layers (L1, L2, L3), from which at least the first layer (L1) serves for the mounting of the components and their electric contacting, and the second layer (L2) serves as the means for transfer of waste heat,
**characterized in that**
the second layer includes a multiple of protruding ranges (PR) radially extending outwards, which are in such a manner flexible, that the carrier (C) may thereby be flexibly held in the housing (H) of the electric motor (M) which ensures a smooth thermal contact between this layer (L2) and the housing (H) of the motor (M).

2. Carrier (C) according to claim 1, **characterized in, that** it is assembled with electronic components.

3. Carrier (C) according to claim 1, **characterized in, that** the second layer (L2) protrudes over the first layer (L1) and that the protruding ranges (PR) include several areas for flexibly holding.

4. Electric motor (M), especially a brushless DC motor, wherein said electric motor (M) comprises a housing (H) and electronic components included inside the housing (H), **characterized in that** the electric motor (M) comprises a carrier (C) according to claim 1, wherein at least part of the electronic components is mounted on the carrier (C), and wherein the carrier (c) is flexibly held within the housing (H).

## Patentansprüche

1. Träger (C) für elektronische Bauteile, insbesondere mit leistungselektronischen Bauteilen, für den Einsatz innerhalb eines metallischen Gehäuses (H) eines Elektromotors (M), wobei der Träger (C) Mittel für den Übergang von Abwärme aufweist und wobei der Träger (C) mindestens zwei Schichten (L1, L2, L3) besitzt, von denen mindestens die erste Schicht (L1) der Befestigung der Bauteile und ihrer elektrischen Kontaktherstellung dient und die zweite Schicht (L2) als Mittel für den Übergang von Abwärme dient, **dadurch gekennzeichnet, dass** die zweite Schicht eine Vielzahl vorspringender, sich radial auswärts erstreckender Zonen (PR) aufweist, die in einer Weise flexibel sind, dass der Träger (C) dadurch im Gehäuse (H) des Elektromotors (M) flexibel gehalten werden kann, was einen gleichmäßigen Wärmekontakt zwischen dieser Schicht (L2) und dem Gehäuse (H) des Motors (M) sicherstellt.

2. Träger (C) nach Anspruch 1, **dadurch gekennzeichnet, dass** er mit elektronischen Bauteilen zusammengebaut ist.

3. Träger (C) nach Anspruch 1, **dadurch gekennzeichnet, dass** die zweite Schicht (L2) über die erste Schicht (L1) vorspringt und dass die vorspringenden Zonen (PR) mehrere Bereiche für flexibles Halten besitzen.

4. Elektromotor (M), insbesondere ein bürstenloser Gleichstrommotor, wobei der Elektromotor (M) ein Gehäuse (H) und im Gehäuse (H) enthaltene, elektronische Bauteile aufweist, **dadurch gekennzeichnet, dass** der Elektromotor (M) einen Träger (C) nach Anspruch 1 aufweist, wobei mindestens ein Teil der elektronischen Bauteile auf dem Träger (C) montiert ist und wobei der Träger (C) innerhalb des Gehäuses (H) flexibel gehalten wird.

## Revendications

1. Support (C) pour composants électroniques, incluant en particulier des composants électroniques de puissance, pour utilisation à l'intérieur d'un logement métallique (H) d'un moteur électrique (M), ledit support (C) comprenant des moyens de transfert de chaleur résiduelle, et ledit support (C) comprenant au moins deux couches (L1, L2, L3), parmi lesquelles au moins la première couche (L1) sert au montage des composants et à leur mise en contact électrique, et la seconde couche (L2) sert de moyen de transfert de chaleur résiduelle,
**caractérisé en ce que**
la seconde couche comprend une multiplicité de plages en saillie (PR) s'étendant radialement vers l'extérieur, qui sont souples de telle sorte que le support (C) peut ainsi être maintenu de façon souple dans le logement (H) du moteur électrique (M), ce qui permet d'assurer un contact thermique lisse entre cette couche (L2) et le logement (H) du moteur (M).

2. Support (C) selon la revendication 1, **caractérisé en ce qu'**il est assemblé avec des composants électroniques.

3. Support (C) selon la revendication 1, **caractérisé en ce que** la seconde couche (L2) fait saillie au-dessus de la première couche (L1) et **en ce que** les plages en saillie (PR) incluent plusieurs zones pour un maintien souple.

4. Moteur électrique (M), en particulier, moteur CC sans balais, ledit moteur électrique (M) comprenant un logement (H) et des composants électroniques inclus à l'intérieur du logement (H), **caractérisé en ce que** le moteur électrique (M) comprend un support (C) selon la revendication 1, dans lequel au moins une partie des composants électroniques est montée sur le support (C), et dans lequel le support (C) est maintenu de façon souple à l'intérieur du logement (H).
